# EUROPEAN PATENT APPLICATION

(11) **EP 4 841 845 A1**
(43) Date of publication of application: **18.11.2026**
(21) Application number: 24921427.1
(22) Date of filing: 10.09.2024
(51) Int. Cl.: H02H 9/04

(54) **PHOTOVOLTAIC INVERTER AND PHOTOVOLTAIC POWER GENERATION SYSTEM**

(30) Priority: 31.01.2024 CN 202410146264
(71) Applicant: Huawei Technologies Co., Ltd., Shenzhen, Guangdong 518129 (CN)
(72) Inventor: WANG, Dechen, Shenzhen, Guangdong 518129 (CN); ZHANG, Xiaowei, Shenzhen, Guangdong 518129 (CN); TIAN, Zhiyong, Shenzhen, Guangdong 518129 (CN)
(74) Representative: Goddar, Heinz J.
(86) International application number: PCT/CN2024/117904
(87) International publication number: WO 2025/161402

(57) **Abstract**

Embodiments of the present invention provide a photovoltaic inverter and a photovoltaic power generation system. The photovoltaic inverter includes an input port, an output port, a main power circuit, an input-end lightning protection circuit, and an output-end lightning protection circuit. The main power circuit is electrically connected between the input port and the output port. The main power circuit and the output port are electrically connected to a neutral wire. The input-end lightning protection circuit is electrically connected between the input port and a ground end. The output-end lightning protection circuit is electrically connected between the output port and the ground end. The input-end lightning protection circuit is configured to discharge a lightning current at the input port. The output-end lightning protection circuit is configured to discharge a lightning current at the output port. A lightning protection balancing circuit is electrically connected between the neutral wire and the ground end. The lightning protection balancing circuit is configured to balance a protection residual voltage at the input port and a protection residual voltage at the output port in a lightning strike process. In embodiments of the present invention, damage to a power component of the main power circuit is avoided.

## Description

### TECHNICAL FIELD

Embodiments of the present invention relate to the field of electronic power technologies, and in particular, to a photovoltaic inverter and a photovoltaic power generation system.

### BACKGROUND

Most photovoltaic inverters are mounted in positions such as mountains, fields, factories, or rooftops. Due to open space and a height difference between a photovoltaic panel and a photovoltaic inverter, the photovoltaic inverter is highly susceptible to impact of lightning currents. Therefore, a comprehensive lightning protection design is required for the interior of the photovoltaic inverter, which is a core component of a photovoltaic power generation system, to ensure that devices in the photovoltaic power generation system are not prone to damage during a lightning strike.

To verify a capability of the photovoltaic inverter to withstand the lightning currents, a lightning impulse current test is performed on the photovoltaic inverter during a development phase to evaluate a capability of the device to withstand the lightning strike on a grid. When the lightning strike occurs in a surrounding environment, the photovoltaic inverter used on the grid is coupled to a strong transient voltage and current. A wiring loop area of cables (solar panel cables and alternating current mains on-grid wiring) of the photovoltaic power generation system is large, and magnitude of coupling to strong interference is large, which is prone to product damage. A lightning protection circuit is usually designed for the photovoltaic inverter to ensure that the device is not damaged when a natural phenomenon such as the lightning strike occurs during normal operation of the photovoltaic inverter.

In a conventional technology, the photovoltaic inverter has an off-grid power supply mode. In the off-grid power supply mode, because protection residual voltages at an input port and an output port of the photovoltaic inverter during the lightning strike are asymmetric, the lightning current may be discharged through a peer end due to a large difference between the protection residual voltages at the input port and the output port. In this case, a lightning current flowing through a main power circuit is excessively large, causing damage to a power component of the main power circuit.

### SUMMARY

In view of this, embodiments of the present invention provide a photovoltaic inverter and a photovoltaic power generation system, to avoid damage to a power component of a main power circuit in a lightning strike process.

A first aspect provides a photovoltaic inverter, including an input port, an output port, a main power circuit, an input-end lightning protection circuit, and an output-end lightning protection circuit. The main power circuit is electrically connected between the input port and the output port. The main power circuit and the output port are electrically connected to a neutral wire. The input-end lightning protection circuit is electrically connected between the input port and a ground end. The output-end lightning protection circuit is electrically connected between the output port and the ground end.

The input-end lightning protection circuit is configured to discharge a lightning current at the input port. The output-end lightning protection circuit is configured to discharge a lightning current at the output port.

A lightning protection balancing circuit is electrically connected between the neutral wire and the ground end. The lightning protection balancing circuit is configured to balance a protection residual voltage at the input port and a protection residual voltage at the output port in a lightning strike process.

In embodiments of the present invention, in the lightning strike process, the lightning protection balancing circuit may balance the protection residual voltage at the input port and the protection residual voltage at the output port, so that a difference between the protection residual voltages at the input port and the output port during a lightning strike is small. In this way, the lightning current at the input port can be discharged through the input-end lightning protection circuit, to avoid discharging a large lightning current at the input port through a peer end. In this case, a lightning current flowing through a power component in the main power circuit is small, so that damage to the power component of the main power circuit is avoided.

In a possible implementation, the lightning protection balancing circuit includes at least one first inductor.

In a possible implementation, the first inductor includes an air core inductor or a magnetic rod inductor. Both the air core inductor and the magnetic rod inductor are inductors that are not prone to saturation. Using the inductor that is not prone to saturation can ensure that a voltage is generated on the first inductor, so that a protection residual voltage in a lightning discharge path of the output port can be improved.

In a possible implementation, the photovoltaic inverter further includes a first switch; and
the first switch is electrically connected between the neutral wire and the lightning protection balancing circuit; or
the first switch is electrically connected between the lightning protection balancing circuit and the ground end.

In a possible implementation, the main power circuit includes at least one group of busbar capacitors electrically connected between a positive busbar and a negative busbar, and a midpoint of each group of busbar capacitors is electrically connected to the neutral wire.

In a possible implementation, the main power circuit further includes a boost circuit and an inverter circuit, the boost circuit is electrically connected between the input port and the busbar capacitors, and the inverter circuit is electrically connected between the busbar capacitors and the output port;
the boost circuit is configured to convert a direct current voltage input by the input port into a working voltage; and
the inverter circuit is configured to: convert the working voltage into an alternating current voltage, and output the alternating current voltage to the output port.

In a possible implementation, the input port includes a negative input end and at least one positive input end.

In a possible implementation, the output port includes a three-phase output port and a port N, where the port N is electrically connected to the neutral wire.

In a possible implementation, the output port includes a two-phase output port and a port O, where the port O is electrically connected to the neutral wire.

A second aspect provides a photovoltaic power generation system, including a photovoltaic panel and the photovoltaic inverter according to the first aspect or any one of the possible implementations of the first aspect, where the photovoltaic panel is electrically connected to the input port;
the photovoltaic panel is configured to: convert light energy into a direct current voltage, and output the direct current voltage to the input port; and
the photovoltaic inverter is configured to: convert the direct current voltage into an alternating current voltage, and output the alternating current voltage through the output port.

In the technical solution provided in embodiments of the present invention, the input-end lightning protection circuit is electrically connected between the input port and the ground end, the output-end lightning protection circuit is electrically connected between the output port and the ground end, and the neutral wire and the ground end are electrically connected to the lightning protection balancing circuit. In the lightning strike process, the lightning protection balancing circuit may balance the protection residual voltage at the input port and the protection residual voltage at the output port, so that the difference between the protection residual voltages at the input port and the output port during the lightning strike is small. In this way, the lightning current at the input port can be discharged through the input-end lightning protection circuit, to avoid discharging a large lightning current at the input port through the peer end. In this case, the lightning current flowing through the power component in the main power circuit is small, so that damage to the power component of the main power circuit is avoided.

### BRIEF DESCRIPTION OF DRAWINGS

To describe the technical solutions in embodiments of the present invention more clearly, the following briefly describes the accompanying drawings used for describing embodiments. Clearly, the accompanying drawings in the following description show merely some embodiments of the present invention, and a person of ordinary skill in the art may still derive other drawings from these accompanying drawings without creative efforts.
FIG. 1A is a schematic of a structure of a photovoltaic inverter without an off-grid power supply function in a related technology;
FIG. 1B is a schematic of a structure of another photovoltaic inverter without an off-grid power supply function in a related technology;
FIG. 2A is a schematic of a structure of a photovoltaic inverter with an off-grid power supply function in a related technology;
FIG. 2B is a schematic of a structure of another photovoltaic inverter with an off-grid power supply function in a related technology;
FIG. 3 is a diagram of a structure of a photovoltaic inverter according to some embodiments;
FIG. 4A is a schematic of a structure of a photovoltaic inverter according to some other embodiments;
FIG. 4B is a schematic of a structure of a photovoltaic inverter according to some other embodiments;
FIG. 5A is a schematic of a structure of a photovoltaic inverter according to some other embodiments;
FIG. 5B is a schematic of a structure of a photovoltaic inverter according to some other embodiments; and
FIG. 6 is a diagram of a structure of a photovoltaic power generation system according to some embodiments.

### DESCRIPTION OF EMBODIMENTS

To make the technical solutions in the present invention more comprehensible, the following describes embodiments of the present invention in detail with reference to the accompanying drawings.

It should be clear that the described embodiments are merely some but not all of embodiments of the present invention. All other embodiments obtained by a person of ordinary skill in the art based on embodiments of the present invention without creative efforts shall fall within the protection scope of the present invention.

The terms used in embodiments of the present invention are merely for the purpose of illustrating specific embodiments, and are not intended to limit the present invention. The terms "a", "said" and "the" of singular forms used in embodiments and the appended claims of the present invention are also intended to include plural forms, unless otherwise specified in the context clearly.

It should be understood that the term "and/or" used in this specification describes only an association relationship between associated objects and represents that three relationships may exist. For example, A and/or B may represent the following three cases: Only A exists, both A and B exist, and only B exists. In addition, the character "/" in this specification usually indicates an "or" relationship between the associated objects.

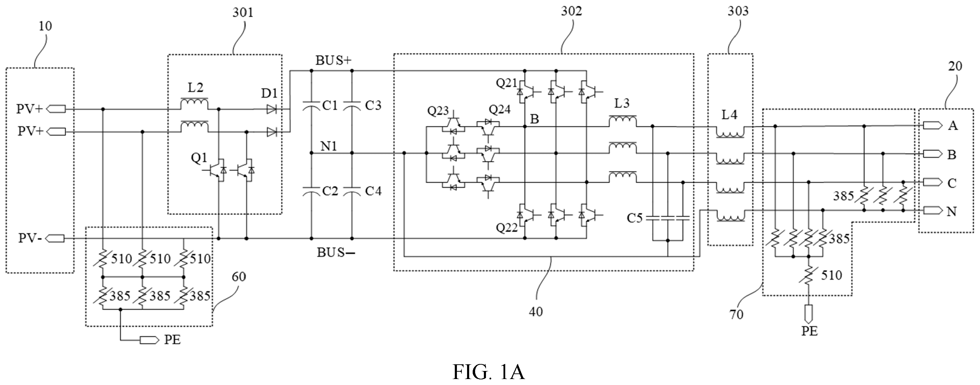

FIG. 1A is a schematic of a structure of a photovoltaic inverter without an off-grid power supply function in a related technology. As shown in FIG. 1A, the photovoltaic inverter includes an input port 10, an output port 20, a main power circuit, an input-end lightning protection circuit 60, and an output-end lightning protection circuit 70. The main power circuit is electrically connected between the input port 10 and the output port 20. The main power circuit and the output port 20 are electrically connected to a neutral wire 40. The input-end lightning protection circuit 60 is electrically connected between the input port 10 and a ground end PE. The output-end lightning protection circuit 70 is electrically connected between the output port 20 and the ground end PE.

The main power circuit includes two busbar capacitors electrically connected between a positive busbar BUS+ and a negative busbar BUS-. A midpoint N1 of each busbar capacitor is electrically connected to the neutral wire 40. One busbar capacitor may include a first capacitor C1 and a second capacitor C2 that are connected in series between the positive busbar BUS+ and the negative busbar BUS-. The other busbar capacitor may include a first capacitor C3 and a second capacitor C4 that are connected in series between the positive busbar BUS+ and the negative busbar BUS-. The main power circuit further includes a boost (boost) circuit 301, an inverter circuit 302, and a first filter circuit 303.

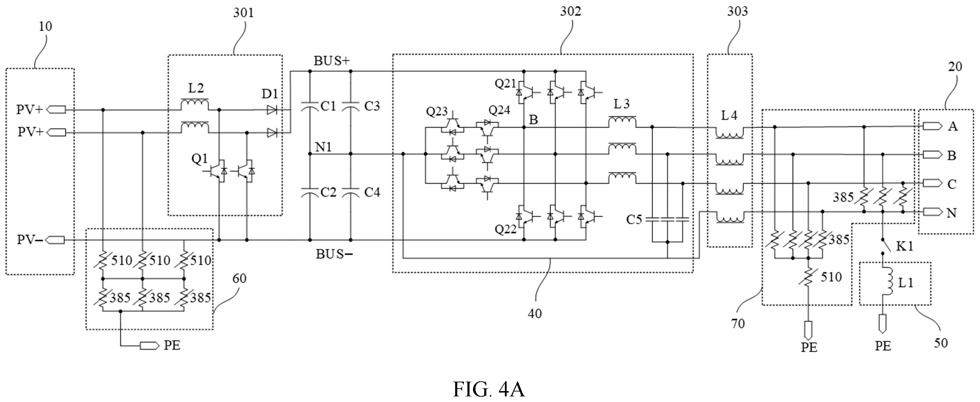

As shown in FIG. 1A, for specific descriptions of the input port 10, the output port 20, the input-end lightning protection circuit 60, the output-end lightning protection circuit 70, the boost circuit 301, the inverter circuit 302, and the first filter circuit 303, refer to the following descriptions in embodiments shown in FIG. 4A, and details are not described herein again.

As shown in FIG. 1A, the input port 10 is a high-voltage direct current (high-voltage direct current, HDVC) port, and the output port 20 is an alternating current output port. The input-end lightning protection circuit 60 may use a solution in which a 510 varistor is connected in series to a 385 varistor, and the input port 10 may implement a lightning protection function through the solution in which the 510 varistor is connected in series to the 385 varistor. The output-end lightning protection circuit 70 may use a solution in which a 385 varistor is connected in series to a 510 varistor, and the output port 20 may implement a lightning protection function through the solution in which the 385 varistor is connected in series to the 510 varistor. In a lightning strike process, when an amplitude of an overvoltage coupled to the input port 10 or the output port 20 reaches an action voltage of the varistor, internal resistance of the varistor is instantaneously reduced to a short circuit state based on a piezoelectric feature. In this case, a protection residual voltage at the input port 10 is equivalent to a protection residual voltage at the output port 20. That is, a difference between the protection residual voltages at the input port 10 and the output port 20 is small. A lightning current is discharged nearby. That is, a lightning current at the input port 10 is discharged through the input-end lightning protection circuit 60, and a lightning current at the output port 20 is discharged through the output-end lightning protection circuit 70. In this case, a lightning current flowing through a power component in the main power circuit is small and is lower than a lightning overcurrent capability of the power component, so that the power component of the main power circuit is not damaged.

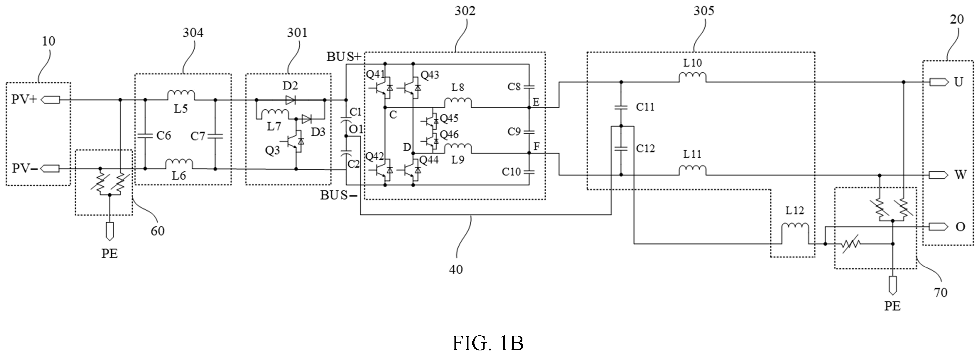

FIG. 1B is a schematic of a structure of another photovoltaic inverter without an off-grid power supply function in a related technology. As shown in FIG. 1B, the photovoltaic inverter includes an input port 10, an output port 20, a main power circuit, an input-end lightning protection circuit 60, and an output-end lightning protection circuit 70. The main power circuit is electrically connected between the input port 10 and the output port 20. The main power circuit and the output port 20 are electrically connected to a neutral wire 40. The input-end lightning protection circuit 60 is electrically connected between the input port 10 and a ground end PE. The output-end lightning protection circuit 70 is electrically connected between the output port 20 and the ground end PE.

The main power circuit includes a busbar capacitor electrically connected between a positive busbar BUS+ and a negative busbar BUS-, and a midpoint O1 of the busbar capacitor is electrically connected to the neutral wire 40. The busbar capacitor may include a first capacitor C1 and a second capacitor C2 that are connected in series between the positive busbar BUS+ and the negative busbar BUS-. The main power circuit further includes a second filter circuit 304, a boost circuit 301, an inverter circuit 302, and a third filter circuit 305.

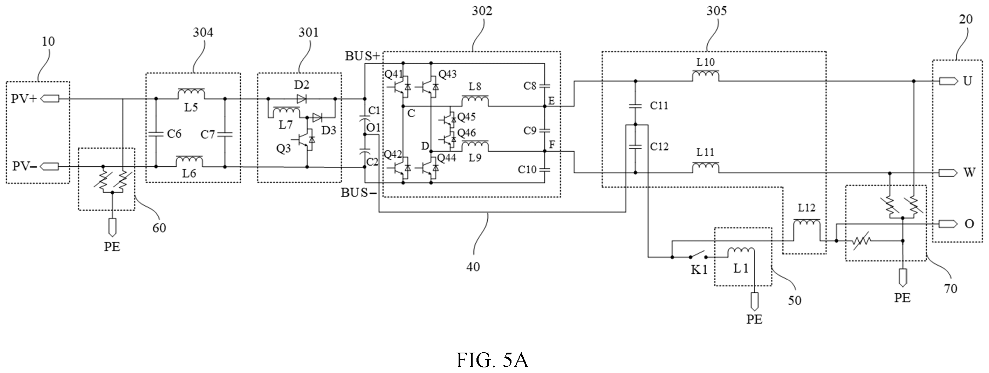

As shown in FIG. 1B, for specific descriptions of the input port 10, the output port 20, the input-end lightning protection circuit 60, the output-end lightning protection circuit 70, the second filter circuit 304, the boost circuit 301, the inverter circuit 302, and the third filter circuit 305, refer to the following descriptions in embodiments shown in FIG. 5A, and details are not described herein again.

As shown in FIG. 1B, the input port 10 is an HDVC port, and the output port 20 is an alternating current output port. The input-end lightning protection circuit 60 may use a varistor solution, and the input port 10 may implement a lightning protection function through the varistor solution. The output-end lightning protection circuit 70 may use a varistor solution, and the output port 20 may implement a lightning protection function through the varistor solution. In a lightning strike process, when an amplitude of an overvoltage coupled to the input port 10 or the output port 20 reaches an action voltage of a varistor, internal resistance of the varistor is instantaneously reduced to a short circuit state based on a piezoelectric feature. In this case, a protection residual voltage at the input port 10 is equivalent to a protection residual voltage at the output port 20. That is, a difference between the protection residual voltages at the input port 10 and the output port 20 is small. A lightning current is discharged nearby. That is, a lightning current at the input port 10 is discharged through the input-end lightning protection circuit 60, and a lightning current at the output port 20 is discharged through the output-end lightning protection circuit 70. In this case, a lightning current flowing through a power component in the main power circuit is small and is lower than a lightning overcurrent capability of the power component, so that the power component of the main power circuit is not damaged.

In conclusion, for the photovoltaic inverter without the off-grid power supply function, the protection residual voltages at the input port 10 and the output port 20 are symmetric under the action of the input-end lightning protection circuit 60 and the output-end lightning protection circuit 70 during a lightning strike. That is, the difference between the protection residual voltages at the input port 10 and the output port 20 is small. Therefore, in the lightning strike process, the lightning current is not discharged through a peer end due to a large difference between the protection residual voltages, so that the lightning current flowing through the main power circuit is small, and the power component of the main power circuit is not damaged.

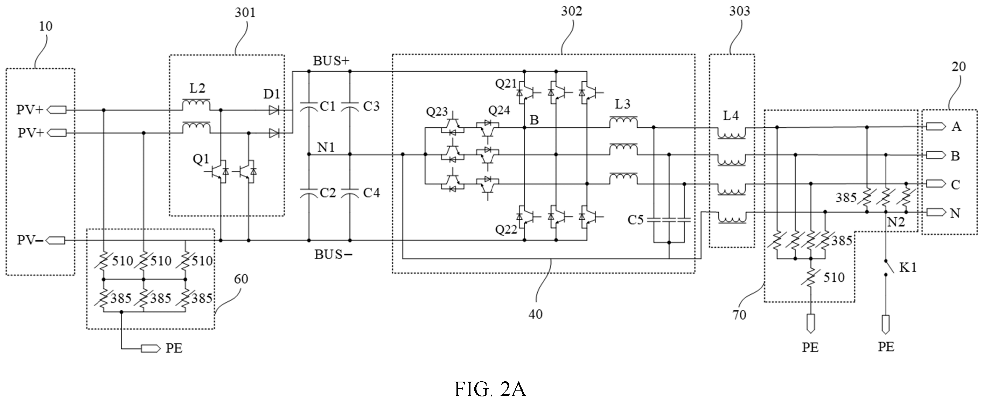

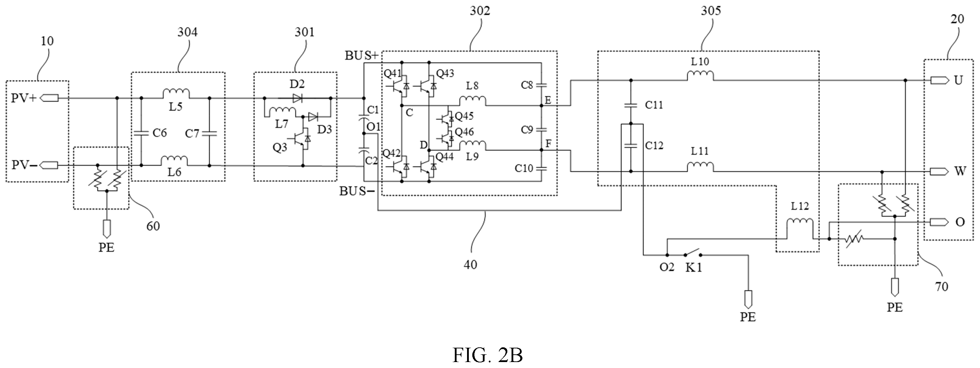

To enable the photovoltaic inverters in FIG. 1A and FIG. 1B to have the off-grid power supply function, product functions of the photovoltaic inverters in FIG. 1A and FIG. 1B may be upgraded. As shown in FIG. 2A and FIG. 2B, the neutral wire 40 in the photovoltaic inverters in FIG. 1A and FIG. 1B is electrically connected to the ground end PE.

FIG. 2A is a schematic of a structure of a photovoltaic inverter with an off-grid power supply function in a related technology. As shown in FIG. 2A, based on the embodiment shown in FIG. 1A, the neutral wire 40 is electrically connected to the ground end PE.

FIG. 2B is a schematic of a structure of another photovoltaic inverter with an off-grid power supply function in a related technology. As shown in FIG. 2B, based on the embodiment shown in FIG. 1B, the neutral wire 40 is electrically connected to the ground end PE.

Further, as shown in FIG. 2A and FIG. 2B, a first switch K1 may be further disposed between the neutral wire 40 and the ground end PE. If the photovoltaic inverter is in an on-grid power supply mode, the first switch K1 is turned off, and the neutral wire 40 is disconnected from the ground end PE. If the photovoltaic inverter is in an off-grid power supply mode, the first switch K1 is turned on, and the neutral wire 40 is connected to the ground end PE.

The photovoltaic inverter with the off-grid function has a new technical problem in a lightning strike process: The photovoltaic inverter is in the off-grid power supply mode (the first switch K1 is turned on). When the input port 10 is coupled to a lightning current, because the neutral wire 40 is electrically connected to the ground end PE, a protection residual voltage in a lightning discharge path of the output port 20 is low, and impedance is small, and the lightning current at the input port 10 is discharged through a discharge path of the output port 20. For example, as shown in FIG. 2A, a lightning common-mode current at the input port 10 is 10 kA. Because the neutral wire 40 is electrically connected to the ground end PE (in this case, K1 is turned on) to form a low impedance path, the lightning current may be discharged through a discharge path (diode→busbar capacitor→point N2→ground end PE). The discharge path of the lightning current causes a large lightning current to flow through the main power circuit, which causes overcurrent damage to the power component of the main power circuit. As shown in FIG. 2B, a lightning common-mode current at the input port 10 is 10 kA. Because the neutral wire 40 is electrically connected to the ground end PE (in this case, K1 is turned on) to form a low impedance path, the lightning current may be discharged through a discharge path (diode→busbar capacitor→point O2→ground end PE). The discharge path of the lightning current causes a large lightning current to flow through the main power circuit, which causes overcurrent damage to the power component of the main power circuit. During actual product application, the discharge paths of the lightning currents in FIG. 2A and FIG. 2B may alternatively be other paths, and the foregoing discharge paths are merely examples.

To resolve the technical problem in the foregoing related technology, embodiments of the present invention provide a photovoltaic inverter and a photovoltaic power generation system. In the photovoltaic inverter, an input-end lightning protection circuit is electrically connected between an input port and a ground end, an output-end lightning protection circuit is electrically connected between an output port and the ground end, and a neutral wire and the ground end are electrically connected to a lightning protection balancing circuit. In a lightning strike process, the lightning protection balancing circuit may balance a protection residual voltage at the input port and a protection residual voltage at the output port, so that a difference between the protection residual voltages at the input port and the output port during a lightning strike is small. In this way, a lightning current at the input port can be discharged through the input-end lightning protection circuit, to avoid discharging a large lightning current at the input port through a peer end. In this case, a lightning current flowing through a power component in a main power circuit is small, so that damage to the power component of the main power circuit is avoided.

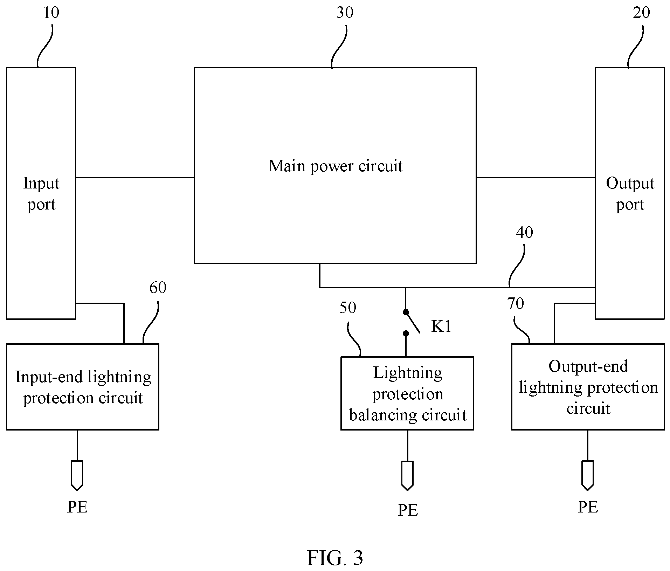

FIG. 3 is a diagram of a structure of a photovoltaic inverter according to some embodiments. As shown in FIG. 3, the photovoltaic inverter may include an input port 10, an output port 20, and a main power circuit 30. The main power circuit 30 is electrically connected between the input port 10 and the output port 20. The main power circuit 30 and the output port 20 are electrically connected to a neutral wire 40. A lightning protection balancing circuit 50 is electrically connected between the neutral wire 40 and a ground end PE.

The input port 10 may receive a direct current voltage output by a photovoltaic panel, and output the direct current voltage to the main power circuit 30. The main power circuit 30 may convert the direct current voltage into an alternating current voltage, and output the alternating current voltage to the output port 20. The output port 20 may output the alternating current voltage.

To enable the photovoltaic inverter to have a lightning protection function, the photovoltaic inverter may further include an input-end lightning protection circuit 60 and an output-end lightning protection circuit 70. The input-end lightning protection circuit 60 is electrically connected between the input port 10 and the ground end PE, and the output-end lightning protection circuit 70 is electrically connected between the output port 20 and the ground end PE. In a lightning strike process, the input-end lightning protection circuit 60 may be configured to discharge a lightning current at the input port 10, and the output-end lightning protection circuit 70 may be configured to discharge a lightning circuit of the output port 20, so that the lightning current is discharged nearby.

The lightning protection balancing circuit 50 is configured to balance a protection residual voltage at the input port 10 and a protection residual voltage at the output port 20 in the lightning strike process.

In embodiments of the present invention, the lightning strike process may be a lightning strike process in a simulated lightning strike experiment.

In some embodiments, the photovoltaic inverter is a hybrid (hybrid) inverter. In this case, the photovoltaic inverter has an on-grid power supply mode and an off-grid power supply mode, and the photovoltaic inverter may switch between the on-grid power supply mode and the off-grid power supply mode. The photovoltaic inverter further includes a first switch K1. In an optional solution, as shown in FIG. 3, the first switch K1 is electrically connected between the neutral wire 40 and the lightning protection balancing circuit 50. Specifically, a first end of the first switch K1 is electrically connected to the neutral wire 40, a second end of the first switch K1 is electrically connected to a first end of the lightning protection balancing circuit 50, and a second end of the lightning protection balancing circuit 50 is electrically connected to the ground end PE. In another optional solution, the first switch K1 is electrically connected between the lightning protection balancing circuit 50 and the ground end PE. Specifically, a first end of the lightning protection balancing circuit 50 is electrically connected to the neutral wire 40, a second end of the lightning protection balancing circuit 50 is electrically connected to a first end of the first switch K1, and a second end of the first switch K1 is electrically connected to the ground end PE. This case is not specifically illustrated in the figure. As shown in FIG. 3, if the photovoltaic inverter is in the on-grid power supply mode, the first switch K1 is turned off. In this case, the neutral wire 40 is disconnected from the lightning protection balancing circuit 50, and the neutral wire 40 cannot be electrically connected to the ground end PE through the lightning protection balancing circuit 50. If the photovoltaic inverter is in the off-grid power supply mode, the first switch K1 is turned on. In this case, the neutral wire 40 is connected to the lightning protection balancing circuit 50, and the neutral wire 40 may be electrically connected to the ground end PE through the lightning protection balancing circuit 50. That is, the lightning protection balancing circuit 50 is electrically connected between the neutral wire 40 and the ground end PE.

In some embodiments, the lightning protection balancing circuit 50 may include at least one first inductor. In the lightning strike process, when the photovoltaic inverter is in the off-grid power supply mode, the lightning protection balancing circuit 50 may balance the protection residual voltage at the input port 10 and the protection residual voltage at the output port 20, so that a difference between the protection residual voltages at the input port and the output port during lightning strike is small. The input-end lightning protection circuit 60 may discharge the lightning current at the input port 10, to avoid discharging a large lightning current at the input port 10 through a peer end.

In the technical solution of the photovoltaic inverter provided in embodiments of the present invention, the input-end lightning protection circuit is electrically connected between the input port and the ground end, the output-end lightning protection circuit is electrically connected between the output port and the ground end, and the neutral wire and the ground end are electrically connected to the lightning protection balancing circuit. In the lightning strike process, the lightning protection balancing circuit may balance the protection residual voltage at the input port and the protection residual voltage at the output port, so that the difference between the protection residual voltages at the input port and the output port during the lightning strike is small. In this way, the lightning current at the input port can be discharged through the input-end lightning protection circuit, to avoid discharging a large lightning current at the input port through the peer end. In this case, the lightning current flowing through the power component in the main power circuit is small, so that damage to the power component of the main power circuit is avoided.

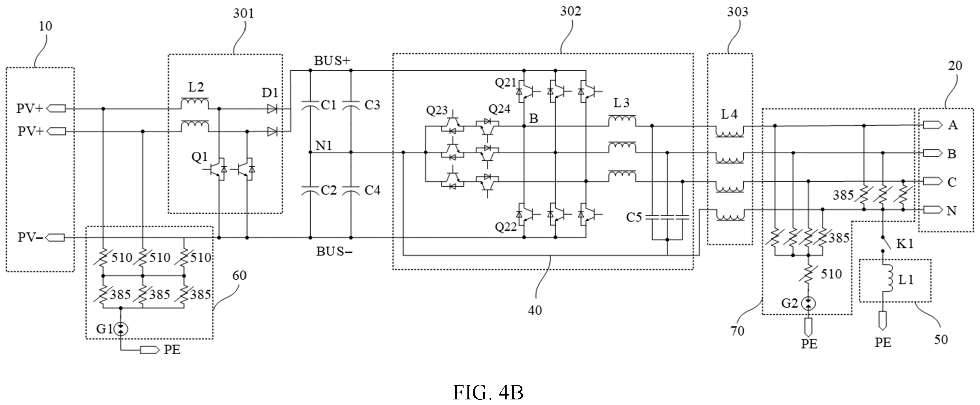

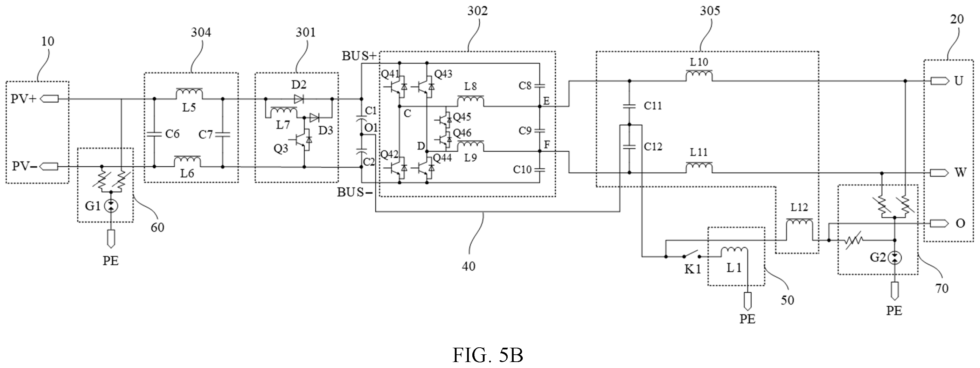

In embodiments of the present invention, the photovoltaic inverter shown in FIG. 3 may include a three-phase photovoltaic inverter or a two-phase photovoltaic inverter. The following describes the three-phase photovoltaic inverter in detail through FIG. 4A and FIG. 4B, and describes the two-phase photovoltaic inverter in detail through FIG. 5A and FIG. 5B.

FIG. 4A is a schematic of a structure of a photovoltaic inverter according to some other embodiments. As shown in FIG. 4A, the photovoltaic inverter is a three-phase photovoltaic inverter. The photovoltaic inverter includes an input port 10, an output port 20, a main power circuit, a lightning protection balancing circuit 50, an input-end lightning protection circuit 60, and an output-end lightning protection circuit 70. The main power circuit is electrically connected between the input port 10 and the output port 20. The main power circuit and the output port 20 are electrically connected to a neutral wire 40. The lightning protection balancing circuit 50 is electrically connected between the neutral wire 40 and a ground end PE. The input-end lightning protection circuit 60 is electrically connected between the input port 10 and the ground end PE. The output-end lightning protection circuit 70 is electrically connected between the output port 20 and the ground end PE.

The input port 10 may be electrically connected to a photovoltaic panel, and the photovoltaic panel may convert light energy into a direct current voltage and output the direct current voltage to the input port 10. The input port 10 may include a negative input end PV- and at least one positive input end PV+. In an optional solution, the input port 10 may include one positive input end PV+ and one negative input end PV-. In another optional solution, the input port 10 may include a plurality of positive input ends PV+ and one negative input end PV-. For example, as shown in FIG. 4A, the input port 10 includes two positive input ends PV+ and one negative input end PV-.

As shown in FIG. 4A, the output port 20 may include a three-phase output port and a port N, the three-phase output port may include a port A, a port B, and a port C, and the port N is electrically connected to the neutral wire 40.

The main power circuit includes at least one group of busbar capacitors electrically connected between a positive busbar BUS+ and a negative busbar BUS-, and a midpoint N1 of each group of busbar capacitors is electrically connected to the neutral wire 40. In an optional solution, each group of busbar capacitors may include a first capacitor and a second capacitor, and a connection point between the first capacitor and the second capacitor is the midpoint N1 of the busbar capacitors. Because midpoints of two groups of busbar capacitors are connected to each other, both of the midpoints of the two groups of busbar capacitors may be referred to as the midpoint N1. For example, as shown in FIG. 4A, the main power circuit includes two groups of busbar capacitors connected in parallel. One group of busbar capacitors may include a first capacitor C1 and a second capacitor C2 that are connected in series between the positive busbar BUS+ and the negative busbar BUS-, and the other group of busbar capacitors may include a first capacitor C3 and a second capacitor C4 that are connected in series between the positive busbar BUS+ and the negative busbar BUS-. A connection point between the first capacitor C1 and the second capacitor C2 is the midpoint N1, and a connection point between the first capacitor C3 and the second capacitor C4 is also the midpoint N1. A first end of the first capacitor C1 is electrically connected to the positive busbar BUS+, a second end of the first capacitor C1 is electrically connected to the midpoint N, a first end of the second capacitor C2 is electrically connected to the midpoint N1, and a second end of the second capacitor C2 is electrically connected to the negative busbar BUS-. A first end of the first capacitor C3 is electrically connected to the positive busbar BUS+, a second end of the first capacitor C3 is electrically connected to the midpoint N1, a first end of the second capacitor C4 is electrically connected to the midpoint N1, and a second end of the second capacitor C4 is electrically connected to the negative busbar BUS-. The midpoint N1 is electrically connected to the neutral wire 40.

In embodiments of the present invention, the main power circuit further includes a boost circuit 301 and an inverter circuit 302. The boost circuit 301 is electrically connected between the input port 10 and the busbar capacitors, and the inverter circuit 302 is electrically connected between the busbar capacitors and the output port 20. The boost circuit 301 is configured to convert a direct current voltage input by the input port 10 into a working voltage. The inverter circuit 302 is configured to: convert the working voltage into an alternating current voltage, and output the alternating current voltage to the output port 20.

In some embodiments, the boost circuit 301 includes a boost sub-circuit disposed corresponding to each positive input end PV+. For example, as shown in FIG. 4A, because the input port 10 includes two positive input ends PV+, the boost circuit 301 includes two boost sub-circuits. As shown in FIG. 4A, the boost sub-circuit may include a second inductor L2, a first diode D1, and a first switching transistor Q1. A first end of the second inductor L2 is electrically connected to the positive input end PV+, a second end of the second inductor L2 is electrically connected to a positive electrode of the first diode D1, and a negative electrode of the first diode D1 is electrically connected to the busbar BUS+. A control end of the first switching transistor Q1 is electrically connected to a control circuit (not shown in the figure), a first end of the first switching transistor Q1 is electrically connected to the second end of the second inductor L2 and the positive electrode of the first diode Q1, and a second end of the first switching transistor Q1 is electrically connected to the negative busbar BUS-.

In some embodiments, the inverter circuit 302 may include a plurality of inverter sub-circuits, and each inverter sub-circuit corresponds to one port of the output port. For example, as shown in FIG. 4A, the inverter circuit 302 includes three inverter sub-circuits, and the three inverter sub-circuits respectively correspond to a port A, a port B, and a port C. An inverter sub-circuit corresponding to the port A is used as an example for description. The inverter sub-circuit includes a second switching transistor Q21, a third switching transistor Q22, a fourth switching transistor Q23, and a fifth switching transistor Q24. The second switching transistor Q21 and the third switching transistor Q22 are connected in series between the positive busbar BUS+ and the negative busbar BUS-, and the fourth switching transistor Q23 and the fifth switching transistor Q24 are connected in series to the midpoint N1 of the busbar capacitors and a connection point B between the second switching transistor Q21 and the third switching transistor Q22. Specifically, a control end of the second switching transistor Q21 is electrically connected to the control circuit, a first end of the second switching transistor Q21 is electrically connected to the positive busbar BUS+, a second end of the second switching transistor Q21 is electrically connected to a first end of the third switching transistor Q22, a control end of the third switching transistor Q21 is electrically connected to the control circuit, and a second end of the third switching transistor Q22 is electrically connected to the negative busbar BUS-. A control end of the fourth switching transistor Q23 is electrically connected to the control circuit, a first end of the fourth switching transistor Q23 is electrically connected to the midpoint N1 of the busbar capacitors, a second end of the fourth switching transistor Q23 is electrically connected to a first end of the fifth switching transistor Q24, a control end of the fifth switching transistor Q24 is electrically connected to the control circuit, and a second end of the fifth switching transistor Q24 is electrically connected to the connection point B. The inverter sub-circuit further includes a third inductor L3 and a third capacitor C5. The third inductor L3 is electrically connected to the connection point B, and the third inductor L3 is electrically connected to the neutral wire 40 through the third capacitor C5. Specifically, a first end of the third inductor L3 is electrically connected to the connection point B, a second end of the third inductor L3 is electrically connected to a first end of the third capacitor C5, and a second end of the third capacitor C5 is electrically connected to the neutral wire 40, where the third inductor L3 is a filter inductor, and the third capacitor C5 is a filter capacitor. In addition, the second end of the third inductor L3 and the first end of the third capacitor C5 may be further electrically connected to the port A of the output port 20. This case is not specifically illustrated.

In embodiments of the present invention, for example, the first switching transistor Q1 to the fifth switching transistor Q24 each may include an insulated gate bipolar transistor (insulated gate bipolar transistor, IGBT) or a metal-oxide-semiconductor field-effect transistor (metal-oxide-semiconductor field-effect transistor, MOSFET). In addition, the control circuit may be configured to control the first switching transistor Q1 to the fifth switching transistor Q24 to be conducted or cut off.

In some embodiments, the main power circuit may further include a first filter circuit 303. The first filter circuit 303 is electrically connected between the inverter circuit 302 and the output port 20. The first filter circuit 303 is configured to: perform filtering processing on an alternating current voltage output by the inverter circuit 302, and output an alternating current voltage obtained through the filtering processing to the output port 20. The first filter circuit 303 includes a plurality of fourth inductors L4. For example, as shown in FIG. 4A, the first filter circuit 303 includes four fourth inductors L4. Based on positions arranged from top to bottom in FIG. 4A, the four fourth inductors L4 may sequentially include a 1^{st} fourth inductor L4, a 2^{nd} fourth inductor L4, a 3^{rd} fourth inductor L4, a 4^{th} fourth inductor L4, and a 5^{th} fourth inductor L4. A first end of the 1^{st} fourth inductor L4 is electrically connected to a corresponding third inductor L3, and a second end of the 1^{st} fourth inductor L4 is electrically connected to the port A. A first end of the 2^{nd} fourth inductor L4 is electrically connected to a corresponding third inductor L3, and a second end of the 2^{nd} fourth inductor L4 is electrically connected to the port B. A first end of a 3^{rd} inductor L4 is electrically connected to a corresponding third inductor L3, and a second end of the 3^{rd} fourth inductor L4 is electrically connected to the port C. The 4^{th} fourth inductor L4 is disposed on the neutral wire 40, so that a first end of the 4^{th} fourth inductor L4 may be electrically connected to the midpoint N1 of the busbar capacitors through the neutral wire 40, and a second end of the 4^{th} fourth inductor L4 may be electrically connected to the port N through the neutral wire 40.

In some embodiments, the input-end lightning protection circuit 60 may include a varistor assembly. The varistor assembly may include a plurality of varistors. At least one varistor is electrically connected between each positive input end PV+ and the ground end PE, and at least one varistor is electrically connected between the negative input end PV- and the ground end PE. As shown in FIG. 4A, two varistors are connected in series between each positive input end PV+ and the ground end PE, and connection points of two varistors connected in series are interconnected. For example, the two varistors connected in series may include a 510 varistor and a 385 varistor. In this case, a 510 varistor and a 385 varistor are connected in series between a 1^{st} positive input end PV+ and the ground end PE, a 510 varistor and a 385 varistor are connected in series between a 2^{nd} positive input end PV+ and the ground end PE, a 510 varistor and a 385 varistor are connected in series between the negative input end PV- and the ground end PE, and connection points of the three 510 varistors and the three 385 varistors that are connected in series are interconnected.

In some embodiments, the output-end lightning protection circuit 70 may include a varistor assembly. The varistor assembly may include a plurality of varistors. At least one varistor is electrically connected between each port of the output port 20 and the ground end PE, and at least one varistor is electrically connected between the port N and each of the port A, the port B, and the port C. As shown in FIG. 4A, for example, a 385 varistor is electrically connected between the port A and the port N, a 385 varistor is electrically connected between the port B and the port N, and a 385 varistor is electrically connected between the port C and the port N. In addition, ends of the four 385 varistors are electrically connected to the port A, the port B, the port C, and the port N respectively, and other ends of the four 385 varistors are all electrically connected to one end of one 510 varistor. The other end of the 510 varistor is electrically connected to the ground end PE.

As shown in FIG. 4A, during actual application, according to a product design requirement, the varistor may be a varistor with a different working voltage. This is not limited in embodiments of the present invention.

In some embodiments, the lightning protection balancing circuit 50 includes at least one first inductor L1. As shown in FIG. 4A, in an optional solution, the lightning protection balancing circuit 50 includes one first inductor L1. A first end of the first inductor L1 is electrically connected to the neutral wire 40, and a second end of the first inductor L1 is electrically connected to the ground end PE. As another optional solution, the lightning protection balancing circuit 50 may include a plurality of first inductors L1, and the plurality of first inductors L1 may be electrically connected to each other in parallel and/or in series. This case is not specifically shown in the figure.

In some embodiments, the first inductor L1 may be an inductor that is not prone to saturation. In an optional solution, the first inductor L1 may include an air core inductor or a magnetic rod inductor. Both the air core inductor and the magnetic rod inductor are inductors that are not prone to saturation. Using the inductor that is not prone to saturation can ensure that a voltage is generated on the first inductor L1, so that a protection residual voltage in a lightning discharge path of the output port 20 can be improved. As shown in FIG. 4A, for example, the first inductor L1 is an air core inductor. An inductance value of the first inductor L1 may be set according to the product design requirement. For example, the inductance value of the first inductor L1 may be 25 µH. This is not limited in embodiments of the present invention.

In some embodiments, as shown in FIG. 4A, the photovoltaic inverter may further include a first switch K1, and the first switch K1 is electrically connected between the neutral wire 40 and the first inductor L1. A first end of the first switch K1 is electrically connected to the neutral wire 40, a second end of the first switch K1 is electrically connected to a first end of the first inductor L1, and a second end of the first inductor L1 is electrically connected to the ground end PE. During actual application, the first switch K1 may alternatively be electrically connected between the first inductor L1 and the ground end PE. In this case, the first end of the first inductor L1 is electrically connected to the neutral wire 40, the second end of the first inductor L1 is electrically connected to the first end of the first switch K1, and the second end of the first switch L1 is electrically connected to the ground end PE. This case is not specifically shown. When the photovoltaic inverter is in an off-grid power supply mode, the first switch K1 is turned on, the neutral wire 40 is connected to the first inductor L1, and the neutral wire 40 may be electrically connected to the ground end PE through the first inductor L1. That is, the first inductor L1 is electrically connected between the neutral wire 40 and the ground end PE. When the photovoltaic inverter is in an on-grid power supply mode, the first switch K1 is turned off. In this case, the neutral wire 40 is disconnected from the first inductor L1, and the neutral wire 40 cannot be electrically connected to the ground end PE through the first inductor L1.

As shown in FIG. 4A, the midpoint N1 of the busbar capacitors is electrically connected to the ground end PE through the first inductor L1. In a lightning strike process, the input port 10 is coupled to a lightning voltage. That is, the input port 10 instantaneously senses the lightning voltage. Therefore, a voltage at the input port 10 rises, and the voltage at the input port 10 reaches an action voltage of the varistor in the input-end lightning protection circuit 60. In this case, the protection residual voltage in the lightning discharge path of the output port 20 rises under an action of the first inductor L1, so that a difference between protection residual voltages at the input port 10 and the output port 20 is small. That is, the first inductor L1 can balance the protection residual voltages at the input port 10 and the output port 20, and the varistor in the input-end lightning protection circuit 60 discharges a lightning overvoltage and overcurrent, to implement nearby discharge of a lightning current, prevent a large lightning current from flowing through the main power circuit, and avoid damage to a power component in the main power circuit. A voltage of the first inductor L1 may be L*di/dt, where L is the inductance value of the first inductor L1, and di/dt is a rate of change of a current with respect to time.

As shown in FIG. 4A, according to the technical solution in embodiments of the present invention, a problem of unbalanced protection residual voltages at the input port 10 and the output port 20 in the lightning strike process in a topology structure of a hybrid photovoltaic inverter can be effectively resolved. The input port 10 may have a common-mode protection capability for a two-wire common-mode current of 5 kA to 10 kA, and a lightning protection capability of the photovoltaic inverter may satisfy a lightning protection specification of the two-wire common-mode current of 5 kA to 10 kA. In an optional solution, in embodiments of the present invention, the lightning protection capability of the photovoltaic inverter may satisfy a lightning protection specification of a two-wire common-mode current of 10 kA. "Two wires" in the two-wire common-mode current mean the positive input end PV+ and the negative input end PV-. For example, in FIG. 4A, a two-wire common-mode current at the 1^{st} positive input end PV+ and the negative input end PV- is 10 kA, and a two-wire common-mode current at the 2^{nd} positive input end PV+ and the negative input end PV- is 10 kA.

FIG. 4B is a schematic of a structure of a photovoltaic inverter according to some other embodiments. As shown in FIG. 4B, a difference from the photovoltaic inverter shown in FIG. 4A lies in that the input-end lightning protection circuit 60 further includes a first gas discharge tube G1, and the output-end lightning protection circuit 70 further includes a second gas discharge tube G2.

The first gas discharge tube G1 is electrically connected between a varistor assembly and the ground end PE. In this case, the varistor assembly may be electrically connected to the ground end PE through the first gas discharge tube G1. A first end of the first gas discharge tube G1 is electrically connected to the varistor assembly (three 385 varistors of the varistor assembly shown in FIG. 4B), and a second end of the first gas discharge tube G1 is electrically connected to the ground end PE.

The second gas discharge tube G2 is electrically connected between a varistor assembly and the ground end PE. A first end of the second gas discharge tube G2 is electrically connected to the varistor assembly (a 510 varistor of the varistor assembly shown in FIG. 4B), and a second end of the second gas discharge tube G2 is electrically connected to the ground end PE.

For a specific description of the varistor assembly, refer to the description of the embodiments shown in FIG. 4A. Details are not described herein again.

As shown in FIG. 4B, the midpoint N1 of the busbar capacitors is electrically connected to the ground end PE through the first inductor L1. In a lightning strike process, the input port 10 is coupled to a lightning voltage. That is, the input port 10 instantaneously senses the lightning voltage. Therefore, a voltage at the input port 10 rises, and the voltage at the input port 10 reaches an action voltage of the varistor and the first gas discharge tube G1 in the input-end lightning protection circuit 60. In this case, a protection residual voltage in a lightning current discharge path of the output port 20 rises under an action of the first inductor L1, so that a difference between protection residual voltages at the input port 10 and the output port 20 is small. That is, the first inductor L1 can balance the protection residual voltages at the input port 10 and the output port 20, and the varistor and the first gas discharge tube G1 in the input-end lightning protection circuit 60 discharge a lightning overvoltage and overcurrent, to implement nearby discharge of a lightning current, prevent a large lightning current from flowing through the main power circuit, and avoid damage to a power component in the main power circuit. A voltage of the first inductor L1 may be L*di/dt, where L is an inductance value of the first inductor L1, and di/dt is a rate of change of a current with respect to time.

Compared with those in the technical solution in FIG. 4A, the input-end lightning protection circuit 60 and the output-end lightning protection circuit 70 in FIG. 4B are both provided with the gas discharge tubes electrically connected to the varistor assemblies, to improve a capability of the input-end lightning protection circuit 60 and the output-end lightning protection circuit 70 to discharge the lightning current, further prevent a large lightning current from flowing through the main power circuit, and further avoid damage to the power component in the main power circuit.

FIG. 5A is a schematic of a structure of a photovoltaic inverter according to some other embodiments. As shown in FIG. 5A, the photovoltaic inverter is a two-phase photovoltaic inverter. The photovoltaic inverter includes an input port 10, an output port 20, a main power circuit, a lightning protection balancing circuit 50, an input-end lightning protection circuit 60, and an output-end lightning protection circuit 70. The main power circuit is electrically connected between the input port 10 and the output port 20. The main power circuit and the output port 20 are electrically connected to a neutral wire 40. The lightning protection balancing circuit 50 is electrically connected between the neutral wire 40 and a ground end PE. The input-end lightning protection circuit 60 is electrically connected between the input port 10 and the ground end PE. The output-end lightning protection circuit 70 is electrically connected between the output port 20 and the ground end PE.

The input port 10 may be electrically connected to a photovoltaic panel, and the photovoltaic panel may convert light energy into a direct current voltage and output the direct current voltage to the input port 10. The input port 10 may include a negative input end PV- and at least one positive input end PV+. In an optional solution, the input port 10 may include a plurality of positive input ends PV+ and one negative input end PV-. In another optional solution, the input port 10 may include one positive input end PV+ and one negative input end PV-. For example, as shown in FIG. 5A, the input port 10 includes one positive input end PV+ and one negative input end PV-.

As shown in FIG. 5A, the output port 20 includes a two-phase output port and a port O, the two-phase output port includes a port U and a port W, and the port O is electrically connected to the neutral wire 40.

The main power circuit includes a group of busbar capacitors electrically connected between a positive busbar BUS+ and a negative busbar BUS-, and a midpoint O1 of the group of busbar capacitors is electrically connected to the neutral wire 40. For example, as shown in FIG. 5A, the group of busbar capacitors may include a first capacitor C1 and a second capacitor C2 that are connected in series between the positive busbar BUS+ and the negative busbar BUS-. A connection point between the first capacitor C1 and the second capacitor C2 is a midpoint O1. A first end of the first capacitor C1 is electrically connected to the positive busbar BUS+, and a second end of the first capacitor C1 is electrically connected to the midpoint O1. A first end of the second capacitor C2 is electrically connected to the midpoint O1, and a second end of the second capacitor C2 is electrically connected to the negative busbar BUS-. The midpoint O1 is electrically connected to the neutral wire 40.

In embodiments of the present invention, the main power circuit further includes a boost circuit 301 and an inverter circuit 302. The boost circuit 301 is electrically connected between the input port 10 and the busbar capacitors, and the inverter circuit 302 is electrically connected between the busbar capacitors and the output port 20. The boost circuit 301 is configured to convert a direct current voltage input by the input port 10 into a working voltage. The inverter circuit 302 is configured to: convert the working voltage into an alternating current voltage, and output the alternating current voltage to the output port 20. In some embodiments, the main power circuit further includes a second filter circuit 304. The second filter circuit 304 is electrically connected between the input port 10 and the boost circuit 301. The second filter circuit 304 is configured to: filter the direct current voltage input by the input port 10, and output a filtered direct current voltage to the boost circuit 301. In some embodiments, the main power circuit further includes a third filter circuit 305. The third filter circuit 305 is electrically connected between the inverter circuit 302 and the output port 20. The third filter circuit 305 is configured to: filter the alternating current voltage output by the inverter circuit 302, and output a filtered alternating current voltage to the output port 20.

In some embodiments, the second filter circuit 304 includes a fourth capacitor C6, a fifth capacitor C7, a fifth inductor L5, and a sixth inductor L6. A first end of the fourth capacitor C6 is electrically connected to the positive input end PV+, and a second end of the fourth capacitor C6 is electrically connected to the negative input end PV-. A first end of the fifth inductor L5 is electrically connected to the positive input end PV+ and the first end of the fourth capacitor C6, and a second end of the fifth point inductor L5 is electrically connected to a first end of the fifth capacitor C7 and the boost circuit 301. The first end of the fifth capacitor C7 is electrically connected to the boost circuit 301, and a second end of the fifth capacitor C7 is electrically connected to a second end of the sixth inductor L6 and the boost circuit 301. A first end of the sixth inductor L6 is electrically connected to the negative input end PV- and the second end of the fourth capacitor C6, and the second end of the sixth inductor L6 is electrically connected to the boost circuit 301.

In some embodiments, the boost circuit 301 includes a second diode D2, a seventh inductor L7, a third diode D3, and a sixth switching transistor Q3. A positive electrode of the second diode D2 is electrically connected to a first end of the seventh inductor L7, a second end of the fifth inductor L5 in the second filter circuit 304, and the first end of the fifth capacitor C7, and a negative electrode of the second diode D2 is electrically connected to a negative electrode of the third diode D3 and the busbar capacitor. The first end of the seventh inductor L7 is electrically connected to the second end of the fifth inductor L6 and the first end of the fifth capacitor C7 in the second filter circuit 304, and a second end of the seventh inductor L7 is electrically connected to a positive electrode of the third diode D3. A negative electrode of the third diode D3 is electrically connected to the busbar capacitor. A control end of the sixth switching transistor Q3 is electrically connected to a control circuit, a first end of the sixth switching transistor Q3 is electrically connected to the second end of the seventh inductor L7 and the positive electrode of the third diode D3, and a second end of the sixth switching transistor Q3 is electrically connected to the busbar capacitor.

In some embodiments, the inverter circuit 302 may include a seventh switching transistor Q41, an eighth switching transistor Q42, a ninth switching transistor Q43, a tenth switching transistor Q44, an eleventh switching transistor Q45, a twelfth switching transistor Q46, an eighth inductor L8, a ninth inductor L9, a sixth capacitor C8, a seventh capacitor C9, and an eighth capacitor C10. The seventh switching transistor Q41 and the eighth switching transistor Q42 are connected in series between the positive busbar BUS+ and the negative busbar BUS-, and the ninth switching transistor Q43 and the tenth switching transistor Q44 are connected in series between the positive busbar BUS+ and the negative busbar BUS-. A control end of the seventh switching transistor Q41 is electrically connected to a control circuit, a first end of the seventh switching transistor Q41 is electrically connected to the positive busbar BUS+, and a second end of the seventh switching transistor Q41 is electrically connected to a connection point C. A control end of the eighth switching transistor Q42 is electrically connected to the control circuit, a first end of the eighth switching transistor Q42 is electrically connected to the connection point C, and a second end of the eighth switching transistor Q42 is electrically connected to the negative busbar BUS-. A control end of the ninth switching transistor Q43 is electrically connected to the control circuit, a first end of the ninth switching transistor Q43 is electrically connected to the positive busbar BUS+, and a second end of the ninth switching transistor Q43 is electrically connected to a connection point D. A control end of the tenth switching transistor Q44 is electrically connected to the control circuit, a first end of the tenth switching transistor Q44 is electrically connected to the connection point D, and a second end of the tenth switching transistor Q44 is electrically connected to the negative busbar BUS-. The eleventh switching transistor Q45 and the twelfth switching transistor Q46 are connected in series between the connection point C and the connection point D. A control end of the eleventh switching transistor Q45 is electrically connected to the control circuit, a first end of the eleventh switching transistor Q45 is electrically connected to the connection point C, and a second end of the eleventh switching transistor Q45 is electrically connected to a first end of the twelfth switching transistor Q46. A control end of the twelfth switching transistor Q46 is electrically connected to the control circuit, and a second end of the twelfth switching transistor Q46 is electrically connected to the connection point D. A first end of the eighth inductor L8 is electrically connected to the connection point C, and a second end of the eighth inductor L8 is electrically connected to a connection point E. A first end of the ninth inductor L9 is electrically connected to the connection point D, and a second end of the ninth inductor L9 is electrically connected to a connection point F. The sixth capacitor C8, the seventh capacitor C9, and the eighth capacitor C10 are connected in series between the positive busbar BUS+ and the negative busbar BUS-. A first end of the sixth capacitor C8 is electrically connected to the positive busbar BUS+, and a second end of the sixth capacitor C8 is electrically connected to the connection point E. A first end of the seventh capacitor C9 is electrically connected to the connection point E, and a second end of the seventh capacitor C9 is electrically connected to the connection point F. A first end of the eighth capacitor C10 is electrically connected to the connection point F, and a second end of the eighth capacitor C10 is electrically connected to the negative busbar BUS-.

In embodiments of the present invention, the sixth switching transistor Q3 to the twelfth switching transistor Q46 each may include an IGBT or an MOSFET. In addition, the control circuit may be configured to control the sixth switching transistor Q3 to the twelfth switching transistor Q46 to be conducted or cut off.

In some embodiments, the third filter circuit 305 may include a ninth capacitor C11, a tenth capacitor C12, a tenth inductor L10, an eleventh inductor L11, and a twelfth inductor L12. The ninth capacitor C11 and the tenth capacitor C12 are connected in series between the connection point E and the connection point F. A first end of the ninth capacitor C11 is electrically connected to the connection point E, a second end of the ninth capacitor C11 is electrically connected to a first end of the tenth capacitor C12, and a second end of the tenth capacitor C12 is electrically connected to the connection point F. A connection point between the ninth capacitor C11 and the tenth capacitor C12 is electrically connected to the neutral wire 40. A first end of the tenth inductor L10 is electrically connected to the connection point E, and a second end of the twelfth inductor L12 is electrically connected to the port U. A first end of the eleventh inductor L11 is electrically connected to the connection point F, and a second end of the eleventh inductor L11 is electrically connected to the port W. The twelfth inductor L12 is disposed on the neutral wire 40, so that a first end of the twelfth inductor L12 is electrically connected to the midpoint O1 of the busbar capacitors through the neutral wire 40, and the second end of the twelfth inductor L12 is electrically connected to the port O through the neutral wire 40.

In some embodiments, the input-end lightning protection circuit 60 may include a varistor assembly, and the varistor assembly includes a plurality of varistors. At least one varistor is electrically connected between the positive input end PV+ and the ground end PE, and at least one varistor is electrically connected between the negative input end PV+ and the ground end PE. As shown in FIG. 5A, one varistor is electrically connected between the positive input end PV+ and the ground end PE, a first end of the varistor is electrically connected to the positive input end PV+, and a second end of the varistor is electrically connected to the ground end PE. A varistor is disposed between the negative input end PV+ and the ground end PE, a first end of the varistor is electrically connected to the negative input end PV-, and a second end of the varistor is electrically connected to the ground end PE.

In some embodiments, the output-end lightning protection circuit 70 may include a varistor assembly. The varistor assembly includes a plurality of varistors. At least one varistor is electrically connected between each port of the output port 20 and the ground end PE. As shown in FIG. 5B, one varistor is electrically connected between the port U and the ground end PE, a first end of the varistor is electrically connected to the port U, and a second end of the varistor is electrically connected to the ground end PE. One varistor is electrically connected between the port W and the ground end PE, a first end of the varistor is electrically connected to the port W, and a second end of the varistor is electrically connected to the ground end PE. One varistor is electrically connected between the port O and the ground end PE, a first end of the varistor is electrically connected to the port O, and a second end of the varistor is electrically connected to the ground end PE.

As shown in FIG. 5A, the varistor is electrically connected between the port O and the PE end, to ensure that protection residual voltages at the input port and the output port are symmetrical, prevent unbalanced diversion of a lightning current between the input port and the output port, and avoid damage to a power component.

As shown in FIG. 5A, during actual application, according to a product design requirement, the varistor may be a varistor with a different working voltage. This is not limited in embodiments of the present invention.

In some embodiments, the lightning protection balancing circuit 50 includes at least one first inductor L1. As shown in FIG. 5A, in an optional solution, the lightning protection balancing circuit 50 includes one first inductor L1. A first end of the first inductor L1 is electrically connected to the neutral wire 40, and a second end of the first inductor L1 is electrically connected to the ground end PE. As another optional solution, the lightning protection balancing circuit 50 may include a plurality of first inductors L1, and the plurality of first inductors L1 may be electrically connected to each other in parallel and/or in series. This case is not specifically shown in the figure.

In some embodiments, the first inductor L1 may be an inductor that is not prone to saturation. In an optional solution, the first inductor L1 may include an air core inductor or a magnetic rod inductor. Both the air core inductor and the magnetic rod inductor are inductors that are not prone to saturation. Using the inductor that is not prone to saturation can ensure that a voltage is generated on the first inductor L1, so that a protection residual voltage in a lightning discharge path of the output port 20 can be improved. As shown in FIG. 5A, for example, the first inductor L1 is an air core inductor.

In some embodiments, as shown in FIG. 5A, the photovoltaic inverter may further include a first switch K1, and the first switch K1 is electrically connected between the neutral wire 40 and the first inductor L1. A first end of the first switch K1 is electrically connected to the neutral wire 40, a second end of the first switch K1 is electrically connected to a first end of the first inductor L1, and a second end of the first inductor L1 is electrically connected to the ground end PE. During actual application, the first switch K1 may alternatively be electrically connected between the first inductor L1 and the ground end PE. In this case, the first end of the first inductor L1 is electrically connected to the neutral wire 40, the second end of the first inductor L1 is electrically connected to the first end of the first switch K1, and the second end of the first switch L1 is electrically connected to the ground end PE. This case is not specifically shown. When the photovoltaic inverter is in an off-grid power supply mode, the first switch K1 is turned on, the neutral wire 40 is connected to the first inductor L1, and the neutral wire 40 may be electrically connected to the ground end PE through the first inductor L1. That is, the first inductor L1 is electrically connected between the neutral wire 40 and the ground end PE. When the photovoltaic inverter is in an on-grid power supply mode, the first switch K1 is turned off. In this case, the neutral wire 40 is disconnected from the first inductor L1, and the neutral wire 40 cannot be electrically connected to the ground end PE through the first inductor L1.

As shown in FIG. 5A, the midpoint O1 of the busbar capacitors is electrically connected to the ground end PE through the first inductor L1. In a lightning strike process, the input port 10 is coupled to a lightning voltage. That is, the input port 10 instantaneously senses the lightning voltage. Therefore, a voltage at the input port 10 rises, and the voltage at the input port 10 reaches an action voltage of the varistor in the input-end lightning protection circuit 60. In this case, the protection residual voltage in the lightning discharge path of the output port 20 rises under an action of the first inductor L1, so that a difference between the protection residual voltages at the input port 10 and the output port 20 is small. That is, the first inductor L1 can balance the protection residual voltages at the input port 10 and the output port 20, and the varistor in the input-end lightning protection circuit 60 discharges a lightning overvoltage and overcurrent, to implement nearby discharge of the lightning current, prevent a large lightning current from flowing through the main power circuit, and avoid damage to the power component in the main power circuit. A voltage of the first inductor L1 may be L*di/dt, where L is an inductance value of the first inductor L1, and di/dt is a rate of change of a current with respect to time.

As shown in FIG. 5A, according to the technical solution in embodiments of the present invention, a problem of unbalanced protection residual voltages at the input port 10 and the output port 20 in the lightning strike process in a topology structure of a hybrid photovoltaic inverter can be effectively resolved. The input port 10 may have a common-mode protection capability for a two-wire common-mode current of 5 kA to 10 kA, and a lightning protection capability of the photovoltaic inverter may satisfy a lightning protection specification of the two-wire common-mode current of 5 kA to 10 kA. In an optional solution, in embodiments of the present invention, the lightning protection capability of the photovoltaic inverter may satisfy a lightning protection specification of a two-wire common-mode current of 10 kA. "Two wires" in the two-wire common-mode current mean the positive input end PV+ and the negative input end PV-. For example, in FIG. 5A, a two-wire common-mode current at the positive input end PV+ and the negative input end PV- is 10 kA.

FIG. 5B is a schematic of a structure of a photovoltaic inverter according to some other embodiments. As shown in FIG. 5B, a difference from the photovoltaic inverter shown in FIG. 5A lies in that the input-end lightning protection circuit 60 further includes a first gas discharge tube G1, and the output-end lightning protection circuit 70 further includes a second gas discharge tube G2.

The first gas discharge tube G1 is electrically connected between a varistor assembly and the ground end PE. In this case, the varistor assembly may be electrically connected to the ground end PE through the first gas discharge tube G1. A first end of the first gas discharge tube G1 is electrically connected to the varistor assembly, and a second end of the first gas discharge tube G1 is electrically connected to the ground end PE.

The second gas discharge tube G2 is electrically connected between a plurality of varistors and the ground end PE, a first end of the second gas discharge tube G2 is electrically connected to a varistor assembly, and a second end of the second gas discharge tube G2 is electrically connected to the ground end PE.

As shown in FIG. 5B, the midpoint O1 of the busbar capacitors is electrically connected to the ground end PE through the first inductor L1. In a lightning strike process, the input port 10 is coupled to a lightning voltage. That is, the input port 10 instantaneously senses the lightning voltage. Therefore, a voltage at the input port 10 rises, and the voltage at the input port 10 reaches an action voltage of the varistor and the first gas discharge tube G1 in the input-end lightning protection circuit 60. In this case, a protection residual voltage in a lightning discharge path of the output port 20 rises under an action of the first inductor L1, so that a difference between protection residual voltages at the input port 10 and the output port 20 is small. That is, the first inductor L1 can balance the protection residual voltages at the input port 10 and the output port 20, and the varistor and the first gas discharge tube G1 in the input-end lightning protection circuit 60 discharge a lightning overvoltage and overcurrent, to implement nearby discharge of a lightning current, prevent a large lightning current from flowing through the main power circuit, and avoid damage to a power component in the main power circuit. A voltage of the first inductor L1 may be L*di/dt, where L is an inductance value of the first inductor L1, and di/dt is a rate of change of a current with respect to time.

Compared with those in the technical solution in FIG. 5A, the input-end lightning protection circuit 60 and the output-end lightning protection circuit 70 in FIG. 5B are both provided with the gas discharge tubes electrically connected to the varistor assemblies, to improve a capability of the input-end lightning protection circuit 60 and the output-end lightning protection circuit 70 to discharge the lightning current, further prevent a large lightning current from flowing through the main power circuit, and further avoid damage to the power component in the main power circuit.

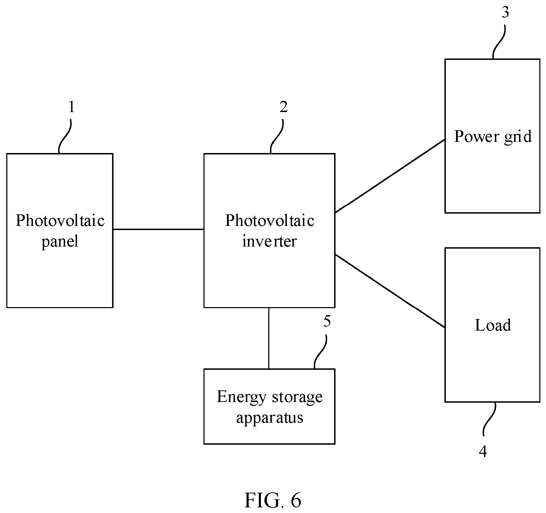

FIG. 6 is a diagram of a structure of a photovoltaic power generation system according to some embodiments. As shown in FIG. 6, the photovoltaic power generation system includes a photovoltaic panel 1 and a photovoltaic inverter 2. The photovoltaic inverter 2 may be the photovoltaic inverter shown in FIG. 3, FIG. 4A, FIG. 4Bb, FIG. 5A, or FIG. 5B. For specific descriptions, refer to the descriptions of the embodiments shown in FIG. 3, FIG. 4A, FIG. 4Bb, FIG. 5A, or FIG. 5B.

The photovoltaic panel 1 is electrically connected to the input port 10. The photovoltaic panel 1 is configured to: convert light energy into a direct current voltage, and output the direct current voltage to the input port 10. The photovoltaic inverter 2 is configured to: convert the direct current voltage into an alternating current voltage, and output the alternating current voltage through the output port 20.

In some embodiments, the output port 20 of the photovoltaic inverter 2 is electrically connected to a power grid 3. When the photovoltaic inverter is in an on-grid power supply mode, the photovoltaic inverter 2 outputs the alternating current voltage to the power grid 3 through the output port 20. In some embodiments, the output port 20 of the photovoltaic inverter 2 is electrically connected to a load 4. When the photovoltaic inverter is in an off-grid power supply mode, the photovoltaic inverter 2 outputs the alternating current voltage to the load 4 through the output port 20, to supply power to the load 4. For example, the load 4 may include a refrigerator, a television, a computer, or the like.

In some embodiments, the photovoltaic power generation system further includes an energy storage apparatus 5. The energy storage apparatus 5 may provide additional direct current input for the photovoltaic inverter 2 when energy input of the photovoltaic power generation system is insufficient, or may store redundant energy when energy output of the photovoltaic power generation system is in surplus. For example, the energy storage apparatus 5 may be a battery.

In the technical solution provided in embodiments of the present invention, the input-end lightning protection circuit is electrically connected between the input port and the ground end, the output-end lightning protection circuit is electrically connected between the output port and the ground end, and the neutral wire and the ground end are electrically connected to the lightning protection balancing circuit. In the lightning strike process, the lightning protection balancing circuit may balance the protection residual voltage at the input port and the protection residual voltage at the output port, so that the difference between the protection residual voltages at the input port and the output port during the lightning strike is small. In this way, the lightning current at the input port can be discharged through the input-end lightning protection circuit, to avoid discharging a large lightning current at the input port through the peer end. In this case, the lightning current flowing through the power component in the main power circuit is small, so that damage to the power component of the main power circuit is avoided.

In embodiments of the present invention, "at least one" means one or more, and "a plurality of" means two or more. The term "and/or" describes an association relationship for describing associated objects and represents that three relationships may exist. For example, A and/or B may indicate that only A exists, both A and B exist, and only B exists. A and B may be singular or plural. The character "/" usually indicates an "or" relationship between the associated objects. "At least one of the following" and similar expressions mean any combination of these terms, including any combination of single or plural terms. For example, at least one of a, b, and c may represent: a, b, c, a-b, a-c, b-c, or a-b-c, where a, b, and c may be one or more.

The foregoing descriptions are merely specific implementations of the present invention. Any variation or replacement readily figured out by a person skilled in the art within the technical scope disclosed in the present invention shall fall within the protection scope of the present invention. The protection scope of the present invention shall be subject to the protection scope of the claims.

## Claims

1. A photovoltaic inverter, comprising an input port, an output port, a main power circuit, an input-end lightning protection circuit, and an output-end lightning protection circuit, wherein the main power circuit is electrically connected between the input port and the output port, the main power circuit and the output port are electrically connected to a neutral wire, the input-end lightning protection circuit is electrically connected between the input port and a ground end, and the output-end lightning protection circuit is electrically connected between the output port and the ground end;
the input-end lightning protection circuit is configured to discharge a lightning current at the input port, and the output-end lightning protection circuit is configured to discharge a lightning current at the output port; and
a lightning protection balancing circuit is electrically connected between the neutral wire and the ground end, and the lightning protection balancing circuit is configured to balance a protection residual voltage at the input port and a protection residual voltage at the output port in a lightning strike process.

2. The photovoltaic inverter according to claim 1, wherein the lightning protection balancing circuit comprises at least one first inductor.

3. The photovoltaic inverter according to claim 2, wherein the first inductor comprises an air core inductor or a magnetic rod inductor.

4. The photovoltaic inverter according to any one of claims 1 to 3, wherein the photovoltaic inverter further comprises a first switch; and
the first switch is electrically connected between the neutral wire and the lightning protection balancing circuit; or
the first switch is electrically connected between the lightning protection balancing circuit and the ground end.

5. The photovoltaic inverter according to claim 1, wherein the main power circuit comprises at least one group of busbar capacitors electrically connected between a positive busbar and a negative busbar, and a midpoint of each group of busbar capacitors is electrically connected to the neutral wire.

6. The photovoltaic inverter according to claim 5, wherein the main power circuit further comprises a boost circuit and an inverter circuit, the boost circuit is electrically connected between the input port and the busbar capacitors, and the inverter circuit is electrically connected between the busbar capacitors and the output port;
the boost circuit is configured to convert a direct current voltage input by the input port into a working voltage; and
the inverter circuit is configured to: convert the working voltage into an alternating current voltage, and output the alternating current voltage to the output port.

7. The photovoltaic inverter according to claim 1, wherein the input port comprises a negative input end and at least one positive input end.

8. The photovoltaic inverter according to claim 1, wherein the output port comprises a three-phase output port and a port N, wherein the port N is electrically connected to the neutral wire.

9. The photovoltaic inverter according to claim 1, wherein the output port comprises a two-phase output port and a port O, wherein the port O is electrically connected to the neutral wire.

10. A photovoltaic power generation system, comprising a photovoltaic panel and the photovoltaic inverter according to any one of claims 1 to 9, wherein the photovoltaic panel is electrically connected to the input port;
the photovoltaic panel is configured to: convert light energy into a direct current voltage, and output the direct current voltage to the input port; and
the photovoltaic inverter is configured to: convert the direct current voltage into an alternating current voltage, and output the alternating current voltage through the output port.
